# EUROPÄISCHE PATENTSCHRIFT

(11) **EP 1 251 612 B1**
(45) Veröffentlichungstag und Bekanntmachung des Hinweises auf die Patenterteilung: **25.05.2011**
(21) Anmeldenummer: 01250140.9
(22) Anmeldetag: 20.04.2001
(51) Int. Cl.: H02B 1/20, H02B 1/21

(54) **Anschlussvorrichtung für einen Geräteeinschub eines Niederspannungs-Schaltfeldes**
Connection device for a withdrawable unit from a low-voltage board
Dispositif de connection pour un appareil extractible d'un tableau basse tension

(43) Veröffentlichungstag der Anmeldung: 23.10.2002
(73) Patentinhaber: SIEMENS AKTIENGESELLSCHAFT, 80333 München (DE)
(72) Erfinder: Kulacoglu, Nesat, 81430 Kartal/Istanbul (TR)

(56) Entgegenhaltungen:
- CH-A- 666 376
- DE-U- 29 505 257

## Beschreibung

Die Erfindung betrifft eine Anschlussvorrichtung zur Herstellung elektrischer Verbindungen eines Geräteeinschubes eines Niederspannungs-Schaltfeldes mit ortsfesten Klemmstellen für weiterführende Kabel, wobei der Geräteeinschub auf einem im Gerüst der Schaltanlage angeordneten Fachboden geführt ist und die Anschlussvorrichtung ein Gehäuse aus Isolierstoff und in dem Gehäuse angeordnete, mit dem Geräteeinschub zusammenwirkende Trennkontaktstücke aufweist.

Eine Anschlussvorrichtung dieser Art ist z. B. durch die EP 0 695 470 B1 bekannt geworden. Dabei enthält die Anschlussvorrichtung sowohl Leiterbahnen zur Verbindung eines Geräteeinschubes mit Feldschienen als auch Leiterbahnen zur Verbindung der Ausgänge der Geräteeinschübe mit ortsfesten Klemmstellen, an denen die zu den Verbrauchern führenden Kabel angeschlossen werden. Die Erfindung betrachtet nur die Verbindung der Ausgänge von Geräteeinschüben mit den ortsfesten Klemmstellen und strebt hierfür eine Lösung an, die sich speziell für den Bereich relativ kleiner Bemessungsströme eignet und hinsichtlich der Anordnung der ortsfesten Klemmstellen eine gewisse Flexibilität ermöglicht. Ferner soll die Anschlussvorrichtung aus möglichst einfachen Teilen bestehen, damit sie auch mittels weniger anspruchsvoller Fertigungsverfahren und damit preiswert herstellbar ist.

Aus der DE 295 05 257 U ist weiter ein Laststromstecker für eine Niederspannungs-Schaltanlage bekannt, die in einem Schaltfeld untergebracht ist, das mehrere Geräteeinschübe aufnehmen kann. Das Schaltfeld weist im hinteren Bereich Verteilschienen auf, auf welche an der Rückseite der Geräteeinschübe angeordnete Laststromstecker aufschiebbar sind, wobei das Aufschieben automatisch beim Einschieben der Geräteeinschübe erfolgt.

Ferner zeigt die CH 666 376 A einen Einschub für elektrische Steuerschränke sowie einen Einschubschrank mit mindestens einem solchen Einschub. Der Einschub besteht dabei aus einer Frontplatte sowie einer Trägerplatte, wobei die Trägerplatte zur Sicherstellung einer optimalen Raumausnutzung eine Aussparung aufweist. Durch die Aussparung wird erreicht, dass übereinander in einen Steuerschrank eingeführte Einschübe einen durchgehenden Kabelschacht bilden, der der Zu- und Wegführung von Kabeln und der Zwischenverbindung der einzelnen Einschübe dient.

Gemäß der Erfindung werden diese Anforderungen dadurch zusammenhängend erfüllt, dass jedes Trennkontaktstück ein Anschlussmittel für ein zu der ortsfesten Klemmstelle führendes Verbindungskabel besitzt und das Gehäuse der Anschlussvorrichtung schaltfeldseitig fest angeordnet ist sowie für jedes zu der Klemmstelle führende Kabel eine Kabeleinführung besitzt.

Der Benutzer ist somit nicht an eine feste räumliche Relation der Trennkontaktstücke und der Klemmstellen gebunden. Darüber hinaus kann er selbst Anschlussvorrichtungen für derartige unterschiedliche Relationen konfektionieren, indem er unterschiedlich lange Verbindungskabel mit den Trennkontaktstücken und den Klemmstellen verbindet.

Der Aufwand für das Gehäuse der Anschlussvorrichtung kann dadurch gering gehalten werden, dass das Gehäuse zwei spiegelsymmetrische Gehäusehälften aufweist, die Tragelemente für die Trennkontaktstücke, Eintrittsöffnungen für bewegbare Trennkontaktstücke und die Kabeleinführungen jeweils zur Hälfte enthalten. Damit sind Fehler beim Zusammenbau des Gehäuses praktisch ausgeschlossen. Auch ist eine ordnungsgemäße Festlegung der Verbindungskabel durch die Kabeleinführungen gewährleistet.

Werden nach einer Ausgestaltung der Erfindung die Trennkontaktstücke quaderförmig ausgebildet und mit einem Durchgangsloch für eine Klemmschraube zum Anschluss eines Verbindungskabels versehen, so können die Trennkontaktstücke als Abschnitte eines handelüblichen Profilmaterials ausgebildet werden, das lediglich noch mit einem Loch zu versehen ist.

Die Quaderform der Trennkontaktstücke erleichtert auch die Montage und Befestigung in dem Gehäuse. Dieses kann hierzu als Tragelemente für die Trennkontaktstücke der Quaderform angepasste Vertiefungen der Gehäusehälften und als zusätzliche, bis zur Teilungsebene des Gehäuses reichende, quer zur Einschubrichtung angeordnete Rippen aufweisen.

Sowohl im Sinne einer Steigerung der elektrischen und der mechanischen Sicherheit wirkt es sich aus, wenn die Gehäusehälften sich in der Einschubrichtung erstreckende Trennwände zur Unterteilung des Gehäuses in jeweils ein Trennkontaktstück aufnehmende Kammern aufweisen, und wenn ferner im Zuge der Trennwände hülsenartige Erweiterungen angeordnet sind, die beim Zusammenfügen beider Gehäusehälften geschlossene Durchführungen für Verbindungs- oder Befestigungselemente ergeben.

Die Erfindung wird im folgenden anhand des in den Figuren dargestellten Ausführungsbeispieles näher erläutert.

Die Figur 1 zeigt ein Schaltfeld einer Niederspannungs-Schaltanlage in perspektivischer Darstellung.

Die Figur 2 zeigt eine Baueinheit aus einem Fachboden und einer Anschlussvorrichtung.

Die Figuren 3 und 4 zeigen ein Gehäuse der Anschlussvorrichtung mit Blick auf Eintrittsöffnungen für bewegbare Trennkontakte bzw. mit Blick auf rückseitige Kabeleinführungen.

Die Figur 5 zeigt eine Gehäusehälfte des in den Figuren 3 und 4 veranschaulichten Gehäuses.

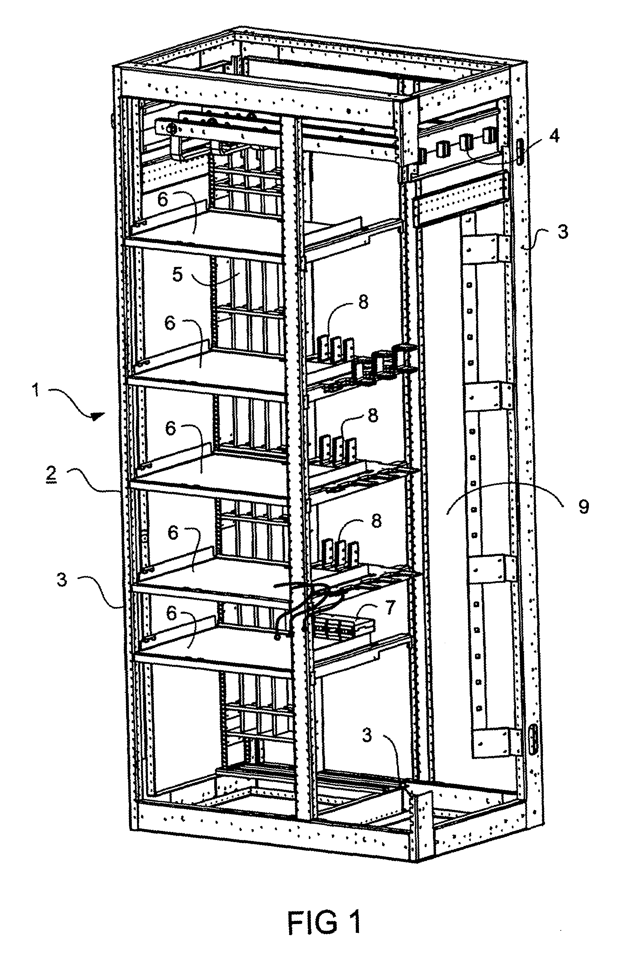

Das in der Figur 1 gezeigte Schaltfeld 1 einer Niederspannungs-Schaltanlage weist in bekannter Weise ein Gerüst 2 auf, das vertikale Gerüstelemente 3 aufweist und eine oben horizontal angeordnete Hauptsammelschiene 4 sowie vertikale Feldschienen 5 enthält. An den vertikalen Gerüstelementen 3 sind Fachböden als Träger und Führungsmittel für nicht gezeigte, an sich bekannte oder geeignete Geräteeinschübe befestigt, die rückseitige Trennkontakte aufweisen.

Der Abstand der Fachböden 6 ist unterschiedlich, um den Raum zwischen zwei Fachböden der Höhe der Geräteeinschübe anzupassen. Ein relativ niedriges Einschubfach ist zwischen den beiden untersten Fachböden 6 in der Figur 1 gebildet, da dies zur Aufnahme eines Geräteeinschubes für einen entsprechend niedrigen Bemessungsstrom ausreicht. Eine hierzu besonders geeignete Anschlussvorrichtung 7 wird im Folgenden näher erläutert. Zuvor sei erwähnt, dass die darüber befindlichen Einschubfächer für Geräteeinschübe mit größerer Leistung bestimmt sind, die mit anderen, der höheren Leistung bzw. dem höheren Bemessungsstrom angepassten Anschlussvorrichtungen 8 zusammenwirken, die nicht Gegenstand der vorliegenden Anmeldung sind.

Das in der Figur 1 rechts vorn gelegene vertikale Gerüstelement 3 ist abgebrochen gezeigt, um freie Einsicht in einen Kabelanschlussraum 9 zu gewähren, der sich seitlich von den Fachböden über die Höhe des Gerüstes 2 erstreckt. In den Kabelanschlussraum 9 ragen Klemmstellen der Anschlussvorrichtungen 7 und 8 hinein, um zu den Verbrauchern führende Kabel anschließen zu können.

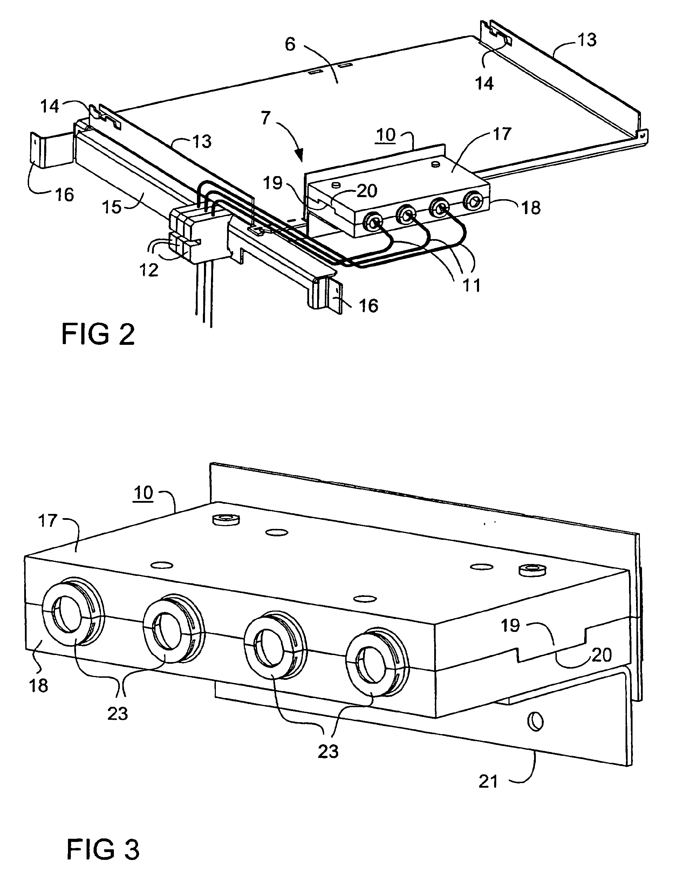

Zum besseren Verständnis der Erfindung wird zunächst auf die Figur 2 Bezug genommen, die eine Baueinheit aus einem Fachboden 6 und einer Anschlussvorrichtung 7 darstellt. Die Anschlussvorrichtung 7 umfasst ein Gehäuse 10, Verbindungskabel 11 und eine ortsfeste Klemmstelle 20. Der Fachboden 6 besitzt seitliche Abkantungen 13 mit je einer Positionskulisse 14, die zur Verriegelung eines Geräteeinschubes in der Betriebstellung und der Trenn- bzw. Teststellung dient. Seitlich am Fachboden 6 ist eine Traverse 15 mit an den Enden vorgesehenen Befestigungslaschen 16 angebracht. Die Traverse 15 dient zugleich als Träger der als Klemmenblock ausgebildeten Klemmstelle 12.

Das Gehäuse 10 der Anschlussvorrichtung 7 besteht aus zwei spiegelsymmetrischen Gehäusehälften 17 und 18, die an der einen Seite einen seitlichen Vorsprung 19 und an der anderen Seite einen Rücksprung 20 besitzen. Vorsprünge 19 und Rücksprünge 20 sind aneinander angepasst und bewirken dadurch eine gegenseitige Ausrichtung und Zentrierung der Gehäusehälften 17 und 18. Das Gehäuse 10 ist mittels eines Tragwinkels 21 derart an der Hinterkante des Fachbodens 6 befestigt, dass Eintrittsöffnungen 22 den am (nicht gezeigten) Geräteeinschub befindlichen (d. h. bewegbaren) Trennkontaktstücken in der richtigen Lage gegenüberstehen. Am gegenüberliegenden (hinteren) Teil des Gehäuses 10 befinden sich Kabeleinführungen 23 für die in den Figuren 1 und 2 gezeigten Verbindungskabel 11. Sowohl die Eintrittsöffnungen als auch die Kabeleinführungen 22 werden je zur Hälfte durch die Gehäusehälften 17 und 18 gebildet.

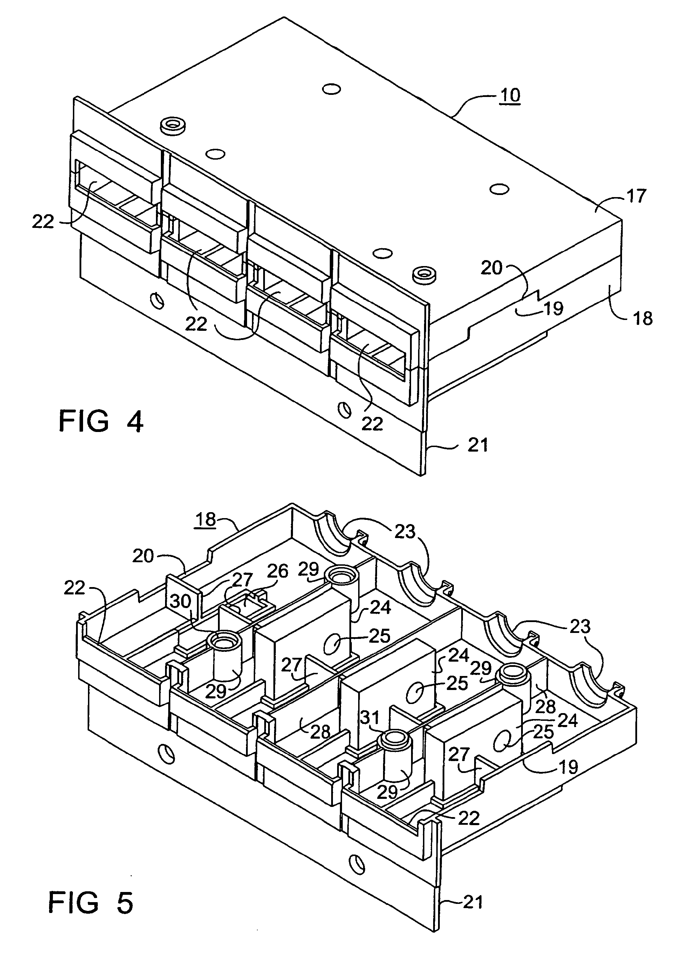

Weitere Einzelheiten der Anschlussvorrichtung 7 nach der Erfindung werden nun anhand der Figur 5 erläutert, in der die untere Gehäusehälfte gesondert gezeigt ist, und zwar mit eingelegten Trennkontaktstücken 24. Das Gehäuse 10 ist zur Aufnahme von insgesamt vier Trennkontaktstücken bemessen (drei Phasenleiter und Neutralleiter), von denen drei gezeigt sind. Für jedes Trennkontaktstück 24 ist in jeder der Gehäusehälften 17 und 18 ein Tragelement in der Gestalt einer Vertiefung 26 angeordnet. Weiterhin werden die Trennkontaktstücke 24 durch quer im Gehäuse 10 liegende Rippen 27 abgestützt. Die Vertiefungen 26 weisen entsprechend der quaderförmigen Gestalt der Trennkontaktstücke 24 eine glatte rechteckige Kontur auf.

Durch Trennwände 28 wird das Gehäuse 10 in Kammern unterteilt, die jeweils ein Trennkontaktstück 24 enthalten. Im Zuge der beiden äußeren Trennwände 28 sind hülsenartige Erweiterungen 29 angeordnet, die abwechselnd einen konzentrischen Einsprung 30 und einen konzentrischen Rücksprung 31 besitzen. Beim Zusammenfügen der Gehäusehälften 17 und 18 gelangen die Einsprünge 30 und Vorsprünge 31 in Eingriff miteinander und bilden geschlossene Durchführungen für Befestigungselemente, wie Niete oder Schrauben.

Die Trennkontaktstücke 24 sind an ihrem den Kabeleinführungen 23 zugewandten Enden mit einer Durchgangsöffnung 25 für eine Klemmschraube versehen, um das Verbindungskabel (11 in der Figur 2) anschließen zu können. Wie man anhand der Figur 5 noch erkennt, haben die Rippen 27 neben einer seitlichen Abstützung der Trennkontaktstücke 24 noch die Funktion, dass ein vorderer Abschnitt für den Eingriff der bewegbaren Trennkontaktstücke von einem hinteren Raum getrennt wird, der das Ende des Verbindungskabel 11 mit der Klemmschraube enthält. Dies trägt, ebenso wie die Anordnung der Trennwände 28, zu einer mechanisch und elektrisch sicheren Gestaltung der Anschlussvorrichtung bei. Die Anordnung der ortsfesten Klemmstelle 12 ist offensichtlich variabel. Je nach der gewünschten Position können kürzere oder längere Verbindungskabel verwendet werden.

### Bezugszeichen

- 1: Schaltfeld
- 2: Gerüst
- 3: Vertikales Gerüstelement
- 4: Hauptsammelschiene
- 5: Feldschiene
- 6: Fachboden
- 7: Anschlussvorrichtung (erster Typ)
- 8: Anschlussvorrichtung (zweiter Typ)
- 9: Kabelanschlussraum

- 10: Gehäuse
- 11: Verbindungskabel
- 12: Klemmstelle
- 13: Abkantung am Fachboden 6
- 14: Positionskulisse
- 15: Traverse
- 16: Befestigungslasche an der Traverse 15
- 17: Obere Gehäusehälfte
- 18: Untere Gehäusehälfte
- 19: Seitlicher Vorsprung

- 20: Seitliche Ausnehmung
- 21: Tragwinkel
- 22: Eintrittsöffnung für bewegbaren Trennkontakt
- 23: Kabeleinführung
- 24: Trennkontaktstück im Gehäuse 10
- 25: Durchgangsöffnung im Trennkontaktstück 24
- 26: Vertiefung für Trennkontaktstück 24
- 27: Rippe der Gehäusehälfte 17, 18
- 28: Trennwand
- 29: Hülsenartige Erweiterung
- 30: Konzentrischer Einsprung
- 31: Konzentrischer Vorsprung

## Patentansprüche

1. Anschlussvorrichtung (7) zur Herstellung elektrischer Verbindungen eines Geräteeinschubes eines Niederspannungs-Schaltfeldes (1) mit ortsfesten Klemmstellen (12) für weiterführende Kabel, wobei der Geräteeinschub auf einem im Gerüst (2) des Schaltfeldes angeordneten Fachboden (6) geführt ist und mit einem Gehäuse (10) aus Isolierstoff und in dem Gehäuse (10) angeordnete, mit dem Geräteeinschub zusammenwirkende Trennkontaktstücke (24),
**dadurch gekennzeichnet, dass** jedes Trennkontaktstück (24) ein Anschlussmittel für ein zu der ortsfesten Klemmstelle (12) führendes Verbindungskabel (11) besitzt und das Gehäuse (10) schaltfeldseitig fest angeordnet ist sowie für jedes zu der Klemmstelle (12) führende Verbindungskabel (11) eine Kabeleinführung (23) besitzt.

2. Anschlussvorrichtung nach Anspruch 1,
**dadurch gekennzeichnet, dass** das Gehäuse (10) der Anschlussvorrichtung (7) zwei spiegelsymmetrische Gehäusehälften (17, 18) aufweist, die Tragelemente für die Trennkontaktstücke (24), Eintrittsöffnungen (22) für bewegbare Trennkontaktstücke und die Kabeleinführungen (23) jeweils zur Hälfte enthalten.

3. Anschlussvorrichtung nach Anspruch 1 oder 2,
**dadurch gekennzeichnet, dass** die Trennkontaktstücke (24) quaderförmig ausgebildet sind und als Anschlussmittel ein Durchgangsloch (32) für eine Klemmschraube zum Anschluss eines Verbindungskabels (11) besitzen.

4. Anschlussvorrichtung nach einem der vorangehenden Ansprüche,
**dadurch gekennzeichnet, dass** die Tragelemente für die Trennkontaktstücke (24) als der Quaderform angepasste Vertiefungen (26) der Gehäusehälften (17, 18) und als zusätzliche, bis zur Teilungsebene des Gehäuses (10) reichende, quer zur Einschubrichtung angeordnete Rippen (27) ausgebildet sind.

5. Anschlussvorrichtung nach Anspruch 4,
**dadurch gekennzeichnet, dass** die Gehäusehälften (17, 18) sich in der Einschubrichtung erstreckende Trennwände (28) zur Unterteilung des Gehäuses (10) in jeweils ein Trennkontaktstück (24) aufnehmende Kammern aufweisen und dass im Zuge der Trennwände (28) hülsenartige Erweiterungen (29) angeordnet sind, die beim Zusammenfügen beider Gehäusehälften (17, 18) geschlossene Durchführungen für Verbindungs- oder Befestigungselemente ergeben.

## Claims

1. Connection device (7) for establishing electrical connections for a withdrawable unit of a low-voltage switchgear panel (1) with fixed clamping points (12) for onward cables, the withdrawable unit being guided on a shelf (6) disposed in the frame (2) of the switchgear panel and with a housing (10) made of insulating material and isolating contacts (24) disposed in the housing (10) and interacting with the withdrawable unit,
**characterised in that**
each isolating contact (24) has a connection means for a connecting cable (11) leading to the fixed clamping point (12) and the housing (10) is disposed in a fixed manner on the switchgear panel side and has a cable inlet (23) for every connecting cable (11) leading to the clamping point (12).

2. Connection device according to claim 1,
**characterised in that**
the housing (10) of the connection device (7) features two mirror-symmetrical housing halves (17, 18), which contain support elements for the isolating contacts (24), entry openings (22) for movable isolating contacts and the cable inlets (23) for the respective half.

3. Connection device according to claim 1 or 2,
**characterised in that**
the isolating contacts (24) are configured as cuboid and have a through hole (32) as the connection means for a clamping screw for connecting a connecting cable (11).

4. Connection device according to one of the preceding claims,
**characterised in that**
the support elements for the isolating contacts (24) are configured as recesses (26) in the housing halves (17, 18) tailored to the cuboid shape and as additional ribs (27) extending to the dividing plane of the housing (10) and disposed perpendicular to the insertion direction.

5. Connection device according to claim 4,
**characterised in that**
the housing halves (17, 18) feature separating walls (28) extending in the insertion direction to divide the housing (10) into chambers respectively accommodating an isolating contact (24) and that sleeve-type extensions (29) are disposed over the course of the separating walls (28), which, when the two housing halves (17, 18) are joined together, produce closed passages for connecting or securing elements.

## Revendications

1. Dispositif de raccordement (7) pour la réalisation de connexions électriques d'un tiroir d'appareillage d'un tableau de commande basse tension (1), comprenant des points de serrage fixes (12) pour des câbles menant plus loin, le tiroir d'appareillage étant guidé sur une tablette (6) disposée dans le châssis (2) du tableau de commande, et comprenant un boîtier (10) en matière isolante ainsi que des pièces de contact de coupure (24) disposées dans le boîtier (10), qui coopèrent avec le tiroir d'appareillage,
**caractérisé en ce que**
chaque pièce de contact de coupure (24) possède un moyen de raccordement pour un câble de connexion (11) menant au point de serrage fixe (12), et le boîtier (10) est disposé à demeure du côté du tableau de commande et possède une entrée de câble (23) pour chaque câble de connexion (11) menant au point de serrage (12).

2. Dispositif de raccordement selon la revendication 1,
**caractérisé en ce que**
le boîtier (10) du dispositif de raccordement (7) présente deux moitiés de boîtier (17, 18) symétriques, lesquelles contiennent, chacune pour moitié, des éléments de support pour les pièces de contact de coupure (24), des ouvertures d'entrée (22) pour des pièces de contact de coupure mobiles et les entrées de câble (23).

3. Dispositif de raccordement selon la revendication 1 ou 2,
**caractérisé en ce que**
les pièces de contact de coupure (24) ont une forme parallélépipédique et possèdent comme moyen de raccordement un trou débouchant (32) pour une vis de serrage permettant le raccordement d'un câble de connexion (11).

4. Dispositif de raccordement selon l'une des revendications précédentes,
**caractérisé en ce que**
les éléments de support pour les pièces de contact de coupure (24) sont réalisés sous forme de creux (26) des moitiés de boîtier (17, 18) adaptés à la forme parallélépipédique et sous forme de nervures (27) supplémentaires s'étendant jusqu'au plan de séparation du boîtier (10), disposées transversalement au sens d'insertion.

5. Dispositif de raccordement selon la revendication 4,
**caractérisé en ce que**
les moitiés de boîtier (17, 18) présentent des cloisons (28) s'étendant dans le sens d'insertion, destinés à diviser le boîtier (10) en chambres recevant chacune une pièce de contact de coupure (24), et **en ce que** des évasements (29) en forme de douille sont disposés sur les cloisons (28), qui à l'assemblage des deux moitiés de boîtier (17, 18) forment des passages fermés pour des éléments de connexion ou de fixation.
